# EUROPEAN PATENT SPECIFICATION

(11) **EP 0 697 383 B1**
(45) Date of publication and mention of the grant of the patent: **29.01.1997**
(21) Application number: 94112833.2
(22) Date of filing: 17.08.1994
(51) Int. Cl.: C04B 35/26, C04B 35/645

(54) **Method of preparing a ferrite compact**
Verfahren zur Herstellung eines Formkörpers aus Ferrit
Procédé pour la préparation d'un compact en ferrite

(43) Date of publication of application: 21.02.1996
(73) Proprietor: Takahashi, Yasunori, Tokyo (JP)
(72) Inventor: Takahashi, Yasunori, Tokyo (JP)
(74) Representative: Reinhard - Skuhra - Weise & Partner

(56) References cited:
- EP-A- 0 119 863
- DE-A- 1 471 438
- DE-A- 1 949 599
- GB-A- 839 691
- DATABASE WPI Week 7421, Derwent Publications Ltd., London, GB; AN 74-39316V & JP-A-60 002 129 (MATSUSHITA) 7 April 1966
- PATENT ABSTRACTS OF JAPAN vol. 7, no. 247 (E-208) 2 November 1983 & JP-A-58 135 609 (S.NISHIYAMA) 12 August 1983

## Description

### FIELD OF THE INVENTION

The present invention relates to a method of preparing a ferrite compact.

### DESCRIPTION OF THE PRIOR ART

Ferrite is a magnetic oxide having ferric oxide Fe₂O₃ as the principal component, and ferrite compacts are prepared typically by: Dry Process = raw materials → mixing → drying → calcination → pulverization → granulation → molding → sintering → fabrication → inspection; Co-precipitation Process = raw materials → dissolution → precipitation-deposition → air-oxidation → filtration → drying → granulation → molding → sintering → fabrication → inspection; and Spray-and-thermal decomposition Process = raw materials → dissolution → spray-thermaldecomposition → cracking → granulation → molding → sintering → fabrication → inspection, according to the detail illustrated in "FERRITE": page 45, by Teitaro Hiraga et al., Maruzen (1988). Among these processes, the dry process is widely operated commercially.

In the dry process, the step of calcining a mixture of raw materials for ferrite at 700-900°C changes the raw materials into a state suitable for the following molding step as the result of homogenization of the raw materials, growth of ferrite, dissipation of fine particulates and growing to an appropriate particle size. The calcined raw material is pulverized, granulated, molded and sintered. Since minor components added in the raw material are incorporated eutectically in the crystal grain at a temperature range of 900-1100°C where a sudden decrease in the specific surface area occurs, the step of sintering a molded ferrite by maintaining at 1200-1400°C for 1-4 hours enables to proceed the mergence and growth of crystal grain to a size suitable for exhibiting desired magnetic properties. The ferrite compact thus obtained is cooled to room temperature, however, a thermal contraction due to the solidification of ferrite at around 900°C and shrinkage thereunder take place. Ferrite compacts obtained by sintering at 1200-1400°C according to the co-precipitating process or spray-and-thermal decomposition process inevitably encounter with similar thermal contraction during cooling of the compact to room temperature.

Thus, carrying out the sintering of a molded body at 1200-1400°C according to conventional methods necessitates designing of molds with consideration for the thermal contraction during cooling or finishing treatments against the contraction. This incurs a decreased productivity or an increased cost for the production of ferrite compact.

When a mixture of powdery raw materials for ferrite is roasted at 1200-1400°C under a reducing atmosphere, decrease in the amount of combined oxygen due to reducing reactions turns the material to a metallic state known as a hard ferrite. However, it is difficult to obtain a hard ferrite compact by conventional processes, as the raw materials compressed in a mold and sintered at 1200-1400°C can hardly be subjected to a uniform reduction.

It is possible to obtain a powdery hard ferrite by roasting a mixture of powdery raw materials for ferrite at 1200-1400°C under a reducing atmosphere, in which the raw material readily reduces the oxygen content and turns to a metallic state. However, since the hard ferrite is obtained in a state of fine metallic powder and tends to explode readily due to atmospheric oxygen, commercial production of hard ferrite compacts from the hard ferrite powder is not easy.

### SUMMARY OF THE INVENTION

It is an object of the present invention to provide a process of producing a ferrite compact superior in the dimensional stability with scarce thermal contraction after compacting, and providing an easy and dust-explosion-free method of producing a hard ferrite compact is another object.

### DETAILED DESCRIPTION OF THE PREFERRED EMBODIMENTS

A method of preparing a ferrite compact according to the present invention is that a mixture of powdery raw materials for ferrite is roasted at 1200-1400°C to obtain a powdery ferrite; the powdery ferrite is cooled to a temperatures below the melting temperature of a powdery vitrification agent, then mixed with the powdery vitrification agent to obtain the powdery ferrite coated with the vitrification agent; and the coated powdery ferrite is compacted under heating at a temperature between the melting temperature of the vitrification agent and 700°C.

For the purpose of preparing a compact of soft ferrite mainly composed of metal oxides, a mixture of powdery raw materials for ferrite is roasted at 1200-1400°C in an atmosphere of an oxidizing gas or an inert gas to obtain a powdery soft ferrite; the powdery soft ferrite is cooled to a temperatures below the melting temperature of a powdery vitrification agent, then mixed with the powdery vitrification agent to obtain the powdery soft ferrite coated with the vitrification agent; and the coated powdery soft ferrite is compacted under heating at a temperature between the melting temperature of the vitrification agent and 700°C. Since soft ferrite is mainly composed of metal oxides, powder of soft ferrite does not cause dust explosion based on atmospheric oxygen and is capable of being coated with a powdery vitrification agent or compacted under heating in such an oxidizing atmosphere as in air.

For the purpose of preparing a compact of hard ferrite mainly composed of metals, a mixture of powdery raw materials for ferrite is roasted at 1200-1400°C in an atmosphere of a reducing gas to obtain a powdery hard ferrite; the powdery ferrite is cooled in an atmosphere of a reducing gas or an inert gas to a temperatures below the melting temperature of a powdery vitrification agent, then mixed with the powdery vitrification agent to obtain the powdery hard ferrite coated with the vitrification agent; and the coated hard powdery ferrite is compacted under heating at a temperature between the melting temperature of the vitrification agent and 700°C. Since the steps taken prior to that for obtaining a powdery hard ferrite coated with a vitrification agent are conducted under an atmosphere of a reducing gas or an inert gas, the hard ferrite in a state of fine metallic powder is prevented from the dust explosion due to oxygen. Thanks to no fear of the dust explosion, the hard ferrite powder coated with a vitrification agent powder can be heated and compacted under an arbitrary atmosphere.

As to mixtures of raw materials for ferrite used in the present invention, those employed for producing conventional ferrite are usable, and raw material mixtures for Mn ferrite, Mn-Zn ferrite, Fe ferrite, Ni ferrite, Ni-Zn ferrite, Co ferrite, Cu ferrite, Cu-Zn ferrite, Mg ferrite, Li ferrite, Ba ferrite, Sr ferrite and Y ferrite are exemplified.

The powdery ferrite obtained by roasting a mixture of powdery raw materials at 1200-1400°C has a particle size of preferably less than 1µm, and so it is preferable that the powdery raw materials have a particle size of less than 0.1µm.

As for a vitrification agent for coating of a powdery ferrite by mixing with the powdery ferrite obtained by roasting a mixture of raw materials for ferrite at 1200-1400°C, such a metal oxide heretofore used as doping agents for the production of multilayer semiconductor condensers as MnO, CuO, Bi₂O₃, PbO, Tl₂O₃, Sb₂O₃, Fe₂O₃ and a combination thereof are usable. The temperature of compacting a ferrite powder coated with a vitrification agent coated is 100-700°C, preferably 100-500°, depending on the vitrification agent used. The powdery vitrification agent is a powder of as fine as possible and has preferably a particle size of less than 0.1µm so as to be able to coat uniformly a powdery ferrite having a particle size of less than 1µm. As to the mixing ratio of the vitrification agent to the powdery ferrite, less than 10 parts of the vitrification agent per 100 parts of the powdery ferrite is preferable. A too small mixing ratio of the vitrification agent to the powdery ferrite results in a weak strength in ferrite compact and a too large ratio causes inferior magnetic properties in the product, the ratio is settled appropriately in accordance with uses of the product.

A certain kind of vitrification agent is used as a component of raw materials for ferrite, however, since the vitrification agents are heated during compacting at the maximum temperature of below 700°C, they do not mingle in the ferrite crystal structure to affect gravely the magnetic property.

Rubber magnets or plastic magnets prepared by solidifying ferrite powders with rubber or plastics are known, however, high magnetism is unobtainable by them as a large amount as 20-40% of rubber or plastics is necessary for the solidification and ferrite powders are separated far by the polymeric material. Further, these magnets are not usable for uses at above 200°C in an engine room of cars due to the limited heat resistance. Contrary to them in the present invention, the ferrite powder is compacted in short distance and solidified with a melted inorganic vitrification agent to exhibit high magnetism.

The present invention will be described in detail hereunder by reference to Examples, but will never be limited to only the following Examples.

### Example 1

Powders having an average particle size of 0.1µm order of ZnFe₂O₄ 45 weight parts and of MnFe₂O₄ 45 weight parts were mixed as a raw material for ferrite. Into a cylindrical capsule of 80mm diameter and 330mm length was charged 85g of the raw material powder together with the same amount of 15mm diameter alumina ball. The capsule was subjected, in a rotary furnace of 100mm diameter and 2m length and under 5 liter/minute nitrogen gas ventilation, to temperature rising in 400°C/hour rate to 1400°C, maintaining at 1400°C for 2 hours, temperature lowering in 400°C/hour rate to 400°C, and then 10 weight parts of a vitrification agent (NIPPON DENKIGARASU K.K. CA-8/500: Softening Point [Melting Temperature] 485°C) was charged at that temperature and mixed well. The thus obtained powdery ferrite coated with the vitrification agent had a particle size of 1µm order. The ferrite powder was compacted at 500°C in a mold to prepare a disk ferrite compact having 25mm diameter and 5.5mm thickness. The disk ferrite compact had a residual magnetic flux density Br of 7000(G) and a coercive force Hc=0.15(Oe). The above-mentioned vitrification agent contained alumina and silica other than PbO.

### Example 2

Powders having an average particle size of 0.1µm order of Nd₂O₃ 12 weight parts as metal, of Co₃O₄ 13 weight parts as metal and of Fe₂O₃ 65 weight parts as metal were mixed as a raw material for ferrite. Into a cylindrical capsule of 80mm diameter and 330mm length was charged 90g of the raw material powder together with the same amount of 15mm diameter alumina ball. The capsule was subjected, in a rotary furnace of 100mm diameter and 2m length and under 5 liter/minute ventilation of gas gradually changing from 100 volume% nitrogen to 5/95 volume% hydrogen-nitrogen mixture, to temperature rising in 400°C/hour rate to 1400°C, maintaining at 1400°C for 2 hours, temperature lowering in 400°C/hour rate to 400°C, and then 10 weight parts of a vitrification agent (NIPPON DENKIGARASU K.K. CA-8/500: Softening Point 485°C) was charged at that temperature and mixed well. The thus obtained powdery ferrite coated with the vitrification agent had a particle size of 1µm order. The ferrite powder was compacted at 500°C in a mold to prepare a disk ferrite compact having 25mm diameter and 5.5mm thickness. The disk ferrite compact had a residual magnetic flux density Br of 18000(G) and a coercive force Hc=300(Oe).

Dimensionally stabilized ferrite compacts with scarce thermal shrinkage after compacting are available by compacting a mixture of a powdery ferrite and a vitrification agent at a temperature below 700°C but of above melting temperature of the vitrification agent, as the powdery ferrite had completed thermal shrinkage during cooling after roasting at 1200-1400°C. Hard ferrite compacts are also available.

## Claims

1. A method of preparing a ferrite compact, wherein a mixture of powdery raw materials for ferrite is roasted at 1200-1400°C to obtain a powdery ferrite; the powdery ferrite is cooled to a temperatures below the melting temperature of a powdery vitrification agent, then mixed with the powdery vitrification agent to obtain the powdery ferrite coated with the vitrification agent; and the coated powdery ferrite is compacted under heating at a temperature between the melting temperature of the vitrification agent and 700°C to obtain a ferrite compact.

2. A method of preparing a soft ferrite compact, wherein a mixture of powdery raw materials for ferrite is roasted at 1200-1400°C in an atmosphere of an oxidizing gas or an inert gas to obtain a powdery soft ferrite; the powdery soft ferrite is cooled to a temperatures below the melting temperature of a powdery vitrification agent, then mixed with the powdery vitrification agent to obtain the powdery soft ferrite coated with the vitrification agent; and the coated powdery soft ferrite is compacted under heating at a temperature between the melting temperature of the vitrification agent and 700°C to obtain a soft ferrite compact.

3. A method of preparing a hard ferrite compact, wherein a mixture of powdery raw materials for ferrite is roasted at 1200-1400°C in an atmosphere of a reducing gas to obtain a powdery hard ferrite; the powdery ferrite is cooled in an atmosphere of a reducing gas or an inert gas to a temperatures below the melting temperature of a powdery vitrification agent, then mixed with the powdery vitrification agent to obtain the powdery hard ferrite coated with the vitrification agent; and the coated hard powdery ferrite is compacted under heating at a temperature between the melting temperature of the vitrification agent and 700°C to obtain a hard ferrite compact.

4. A method of preparing a ferrite compact according to claim 1, 2 or 3, wherein the vitrification agent is at least one selected from the group consisting of MnO, CuO, Bi₂O₃, PbO, Tl₂O₃, Sb₂O₃ and Fe₂O₃.

## Patentansprüche

1. Verfahren zur Herstellung eines Formkörpers aus Ferrit, wobei eine Mischung pulverförmiger Ausgangsmaterialien für Ferrit bei 1200 - 1400°C gebrannt wird, um pulverförmigen Ferrit zu erhalten; der pulverförmige Ferrit auf Temperaturen unterhalb der Schmelztemperatur eines pulverförmigen Vitrifikationsmittels abgekühlt wird, er dann mit dem pulverförmigen Vitrifikationsmittel vermischt wird, um den mit dem Vitrifikationsmittel beschichteten pulverförmigen Ferrit zu erhalten; und der beschichtete pulverförmige Ferrit unter Erhitzen bei einer Temperatur zwischen der Schmelztemperatur des Vitrifikationsmittels und 700°C kompaktiert wird, um einen Formkörper aus Ferrit zu erhalten.

2. Verfahren zur Herstellung eines Formkörpers aus weichem Ferrit, wobei eine Mischung pulverförmiger Ausgangsmaterialien für Ferrit bei 1200 - 1400°C in einer Atmosphäre aus einem oxidierenden Gas oder einem inerten Gas gebrannt wird, um einen pulverförmigen weichen Ferrit zu erhalten; der pulverförmige weiche Ferrit auf Temperaturen unterhalb der Schmelztemperaturen unterhalb der Schmelztemperatur eines pulverförmigen Vitrifikationsmittels abgekühlt wird, er dann mit dem pulverförmigen Vitrifikationsmittel vermischt wird, um den pulverförmigen, mit dem Vitrifikationsmittel beschichteten weichen Ferrit zu erhalten; und der beschichtete weiche Ferrit unter Erhitzen bei einer Temperatur zwischen der Schmelztemperatur des Vitrifikationsmittels und 700°C kompaktiert wird, um einen Formkörper aus weichem Ferrit zu erhalten.

3. Verfahren zur Herstellung eines Formkörpers aus hartem Ferrit, wobei eine Mischung pulverförmiger Ausgangsmaterialien für Ferrit bei 1200 - 1400°C in einer Atmosphäre aus einem reduzierenden Gas gebrannt wird, um einen pulverförmigen harten Ferrit zu erhalten; der pulverförmige Ferrit in einer Atmosphäre aus einem reduzierenden Gas oder einem inerten Gas auf Temperaturen unterhalb der Schmelztemperatur eines pulverförmigen Vitrifikationsmittel abgekühlt wird, er dann mit dem pulverförmigen Vitrifikationsmittel vermischt wird, um den pulverförmigen harten, mit dem Vitrifikationsmittel beschichteten Ferrit zu erhalten; und der beschichtete harte pulverförmige Ferrit unter Erhitzen bei einer Temperatur zwischen der Schmelztemperatur des Vitrifikationsmittels und 700°C beschichtet wird, um einen Formkörper aus hartem Ferrit zu erhalten.

4. Verfahren zur Herstellung eines Formkörpers aus Ferrit nach Anspruch 1, 2, oder 3,
wobei das Vitrifikationsmittel zumindest ein Mittel ist, ausgewählt aus der Gruppe, bestehend aus MnO, CuO, Bi₂O₃, PbO, Tl₂O₃, Sb₂O₃ und Fe₂O₃.

## Revendications

1. Procédé de préparation d'un compact en ferrite, dans lequel un mélange de matières premières pulvérulentes pour ferrite est grillé à 1200-1400°C pour obtenir un ferrite pulvérulent ; le ferrite pulvérulent est refroidi à une température située en-dessous de la température de fusion d'un agent de vitrification pulvérulent, puis est mélangé avec l'agent de vitrification pulvérulent pour obtenir le ferrite pulvérulent revêtu de l'agent de vitrification ; et le ferrite pulvérulent revêtu est compacté par chauffage à une température comprise entre la température de fusion de l'agent de vitrification et 700°C pour obtenir un compact en ferrite.

2. Procédé de préparation d'un compact en ferrite doux, dans lequel un mélange de matières premières pulvérulentes pour ferrite est grillé à 1200 - 1400°C dans une atmosphère d'un gaz oxydant ou d'un gaz inerte pour obtenir un ferrite doux pulvérulent ; le ferrite doux pulvérulent est refroidi à une température située en-dessous de la température de fusion d'un agent de vitrification pulvérulent, puis est mélangé avec l'agent de vitrification pulvérulent pour obtenir le ferrite doux pulvérulent revêtu avec l'agent de vitrification ; et le ferrite doux pulvérulent revêtu est compacté par chauffage à une température comprise entre la température de fusion de l'agent de vitrification et 700°C pour obtenir un compact en ferrite doux.

3. Procédé de préparation d'un compact en ferrite dur, dans lequel un mélange de matières premières pulvérulentes pour ferrite est grillé à 1200 - 1400°C dans une atmosphère de gaz réducteur pour obtenir un ferrite dur pulvérulent ; le ferrite pulvérulent est refroidi dans une atmosphère de gaz réducteur ou de gaz inerte à une température située en-dessous de la température de fusion d'un agent de vitrification pulvérulent, puis est mélangé avec l'agent de vitrification pulvérulent pour obtenir le ferrite dur pulvérulent revêtu avec l'agent de vitrification ; et le ferrite dur pulvérulent revêtu est compacté par chauffage à une température comprise entre la température de fusion de l'agent de vitrification et 700°C pour obtenir un compact en ferrite dur.

4. Procédé de préparation d'un compact en ferrite selon la revendication 1, 2 ou 3, dans lequel l'agent de vitrification est au moins un membre choisi dans le groupe comprenant MnO, CuO, Bi₂O₃, PbO, Tl₂O₃, Sb₂O₃ et Fe₂O₃.
